# EUROPÄISCHE PATENTANMELDUNG

(11) **EP 2 724 969 A2**
(43) Veröffentlichungstag der Anmeldung: **30.04.2014**
(21) Anmeldenummer: 13005025.5
(22) Anmeldetag: 21.10.2013
(51) Int. Cl.: B65H 49/26, B23K 9/133, B65H 49/36, B65H 75/22

(54) **Spulendorn mit einem Mutterelement für eine Korbspule für Draht**

(30) Priorität: 27.10.2012 DE 102012021231
(71) Anmelder: Wollnitzke, Helmut, 95100 Selb (DE)
(72) Erfinder: Helmut Wollnitzke, DE-95100 Selb (DE); Wollnitzke, Helmut, DE-95100 Selb (DE)

(57) **Zusammenfassung**

Es wird ein Spulendorn (10) mit einem ringförmigen Mutterelement (18) einer Korbspule für Draht, insbesondere für Schweißdraht, beschrieben, wobei der Spuiendorn (10) einen Außengewindeabschnitt (12) mit Gewinderippen (14) und Gewinderillen (16) aufweist, und das Mutterelement (18) mit einer Innengewinderippe (20) ausgebildet ist. Der Spulendorn (10) weist einen sich axial erstreckenden, radial federnden Bereich (22) auf. Die Gewinderippen (14) des Außengewindeabschnittes (12) erstrecken sich nur bis zu dem federnden Bereich (22). Der federnde Bereich (22) ist mit einem Rampenelement (24) ausgebildet, das in Umfangsrichtung des Spulendorns (10) orientiert mindestens einer Gewinderille (16) des Spulendorns (10) zugeordnet ist. Das Rampenelement (24) weist eine flach geneigte Aufschraub-Rampenfläche (26) und eine steil geneigte Abschraub-Rampenfläche (28) und die Innengewinderippe (20) des Mutterelements (18) weist in Umfangsrichtung zwei voneinander abgewandte Endflächen (30, 34) auf, von welchen die in Aufschraubrichtung des Mutterelementes (18) vorgesehene erste Endfläche (30) eine flach geneigte Aufschraub-Gegenrampenfläche (32) und von welchen die in Abschraubrichtung des Mutterelementes (18) vorgesehene zweite Endfläche (34) eine steil geneigte Abschraub-Gegenrampenfläche (36) aufweist.

## Beschreibung

Die Erfindung betrifft einen Spulendorn mit einem ringförmigen Mutterelement einer Korbspule für Draht, insbesondere für Schweißdraht, wobei der Spulendorn einen Außengewindeabschnitt mit Außengewindegänge definierenden Gewinderippen und damit abwechselnden Gewinderillen besitzt, und das Mutterelement mit einer mindestens einen Innengewindegang bildenden Innengewinderippe ausgebildet ist.

Korbspulen für Draht, insbesondere für Schweißdraht, sind in unterschiedlichen Ausführungsformen bekannt. Beispielsweise offenbart die DE 101 27 774 C2 des Anmelders eine Korbspule, wobei eine Nabe einen maschinenseitigen Nabenkörper und einen daran gelagerten Spulendorn aufweist. Der Spulendorn ist mit einem Außengewindeabschnitt ausgebildet, auf den ein ringförmiges Mutterelement aufgeschraubt ist. Das Mutterelement ist zur direkten Befestigung eines Korbes an der Nabe vorgesehen.

Die DE 102 06 002 C1 des Anmelders offenbart eine Korbspule mit einem Spulendorn, der mit einem Außengewindeabschnitt ausgebildet ist. Ein Korbspulenträger ist am Spulendorn verdrehfest angebracht und mittels eines auf den Außengewindeabschnitt aufgeschraubten ringförmigen Mutterelementes am Spulendorn festgelegt.

Eine Einrichtung zum Befestigen einer Schweißdraht-Korbspule an einem Spulendorn ist aus der DE 10 2006 035 762 B3 des Anmelders bekannt, wobei der Spulendorn axial abwechselnd umlaufende Ringrippen und Ringrillen aufweist. Diese bekannte Einrichtung weist - anstelle eines Mutterelementes - ein Ringelement auf, das ein zentrales, von der Kreisform abweichendes Durchgangsloch mit einer langen und einer dazu rechtwinkelig orientierten kurzen Achse aufweist. Das Durchgangsloch ist mit mindestens einer an die Ringrillen des Spulendorns angepaßten Rippe ausgebildet, die in dem in Richtung der langen Achse zusammengedrückten Zustand des Ringelements von den Ringrillen des Spulendorns außer Eingriff ist, und die im entlasteten Zustand des Ringelementes in eine der Ringrillen des Spulendorns einrastet. Die Ringrippen und die Ringrillen bilden also keine Außengewindegänge.

Ein Spulendorn mit einem Mutterelement für Papierrollen ist aus der US2010/0051738 A1 bekannt.

Aus der DE 20 2011 109 215 U1 des Anmelders ist eine Korbspule für Draht, insbesondere für Schweißdraht, bekannt. Diese Korbspule ist mit einem Spulendorn kombiniert, der einen Außengewindeabschnitt mit Außengewindegänge definierenden Gewinderippen und Gewinderillen ausgebildet ist. Ein ringförmiges Mutterelement ist auf den Außengewindeabschnitt aufgeschraubt.

Bei solchen Spulendornen mit einem Außengewindeabschnitt und mit einem auf diesen aufgeschraubten ringförmigen Mutterelement ist nicht zuverlässig vermeidbar, dass sich das Mutterelement vom Spulendorn unerwünscht abschraubt und löst.

Deshalb liegt der Erfindung die Aufgabe zugrunde, einen Spulendorn mit einem ringförmigen Mutterelement zu schaffen, wobei ein ungewolltes

Abschrauben des Mutterelementes vom Außengewindeabschnitt des Spulendorns auf konstruktiv einfache Weise zuverlässig verhindert wird.

Diese Aufgabe wird erfindungsgemäß durch die Merkmale des Anspruches 1, d.h. dadurch gelöst, dass der Spulendorn einen sich axial erstreckenden, radial federnden Bereich aufweist, dass die Gewinderippen des Außengewindeabschnittes sich nur bis zu dem federnden Bereich erstrecken, dass der federnde Bereich mit einem Rampenelement ausgebildet ist, das in Umfangsrichtung des Spulendorns orientiert mindestens einer Gewinderille des Spulendorns zugeordnet ist, dass das Rampenelement eine flach geneigte Aufschraub-Rampenfläche und eine steil geneigte Abschraub-Rampenfläche aufweist, und dass die Innengewinderippe des Mutterelements in Umfangsrichtung zwei voneinander entfernte Endflächen aufweist, von welchen die in Aufschraubrichtung des Mutterelementes vorgesehene erste Endfläche eine flach geneigte Aufschraub-Gegenrampenfläche und von welchen die in Abschraubrichtung des Mutterelementes vorgesehene zweite Endfläche eine steil geneigte Abschraub-Gegenrampenfläche aufweist.

Durch die flach geneigte Aufschraub-Rampenfläche des Rampenelementes des Spulendorns und die flach geneigte Aufschraub-Gegenrampenfläche der Innengewinderippe des Mutterelementes ist es kraftsparend möglich, das ringförmige Mutterelement auf den Spulendorn aufzuschrauben. Durch die steil geneigte Abschraub-Rampenfläche des Rampenelementes des Spulendorns und die steil geneigte Abschraub-Gegenrampenfläche der Innengewinderippe des Mutterelementes wird das Mutterelement an einem ungewollten Abschrauben vom Spulendorns gehindert; die Abschraub-Rampenfläche und die Abschraub-Gegenrampenfläche bewirken eine zuverlässige Halterung des Mutterelementes am Spulendorn. Soll das ringförmige Mutterelement vom Spulendorn entfernt werden, ist dies nur mit einem relativ großen Kraftaufwand möglich, um mit der steil geneigten Abschraub-Gegenrampenfläche des Mutterelementes die steil geneigte Abschraub-Rampenfläche des Rampenelementes des Spulendorns zu überwinden.

Als vorteilhaft hat es sich erwiesen, wenn der Spulendorn mit einem Paar in Umfangsrichtung voneinander beabstandeten, sich axial erstreckenden Schlitzen ausgebildet ist, durch welche der federnde Bereich seitlich begrenzt ist, wobei die Gewinderippen des Spulendorns sich bis zu den beiden Schlitzen erstrecken. Bevorzugt ist es hierbei, wenn die beiden Schlitze zum stirnseitigen Vorderende, d.h. zu dessen stirnseitiger Ringfläche hin offen sind, so dass der sich axial erstreckende, radial federnde Bereich des Spulendorns quasi fingerartig ausgebildet ist.

Üblicherweise ist es ausreichend, wenn das vom federnden Bereich des Spulendorns nach außen wegstehende Rampenelement einer Gewinderille des Spulendorns zugeordnet ist.

Bevorzugt ist es, wenn das Rampenelement eine radiale Höhenabmessung besitzt, die an die Höhenabmessung der Gewinderippen des Spulendorns angepaßt ist.

Erfindungsgemäß weisen die flach geneigte Aufschraub-Rampenfläche des Rampenelementes des Spulendorns und die flach geneigte Aufschraub-Gegenrampenfläche der Innengewinderippe des ringförmigen Mutterelementes vorzugsweise aneinander angepasste kleine spitze Winkel auf. Dem entsprechend ist es vorteilhaft, wenn die steil geneigte Abschraub-Rampenfläche des Rampenelementes des Spulendorns und die steil geneigte Abschraub-Gegenrampenfläche der Innengewinderippe des Mutterelementes aneinander angepasste große spitze Winkel, d.h. kleine stumpfe Winkel aufweisen.

Weitere Einzelheiten ergeben sich aus der nachfolgenden Beschreibung in Verbindung mit den anliegenden Zeichnungen.

Es zeigen:
Figur 1 eine perspektivische Seitenansicht einer Ausführungsform des Spulendorns,
Figur 2 eine andere perspektivische Darstellung des Spulendorns gemäß
Figur 1,

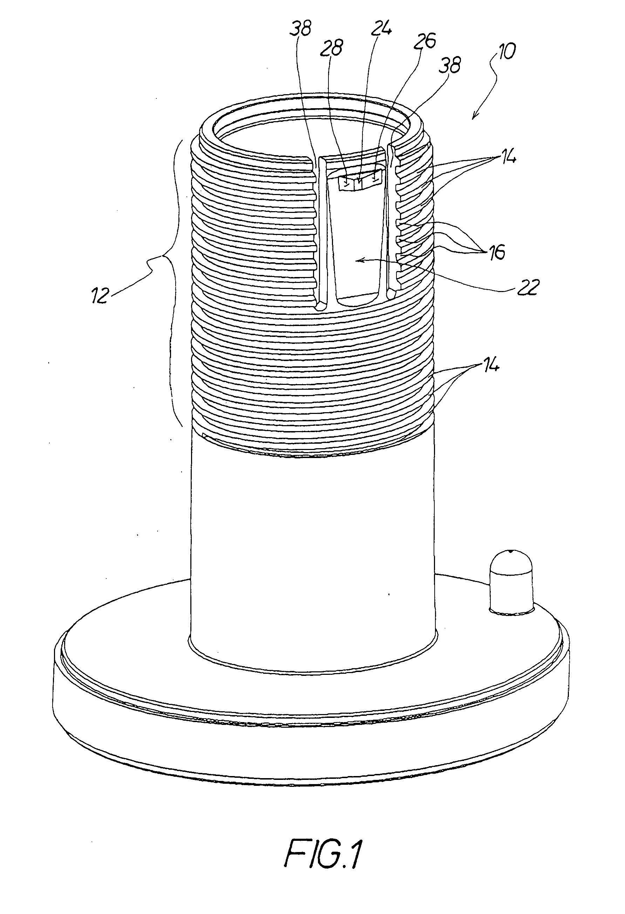

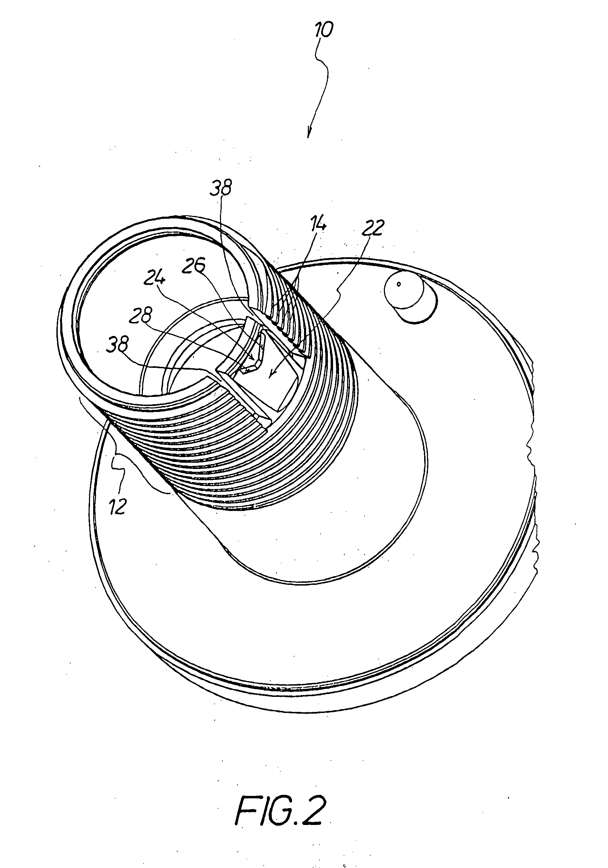

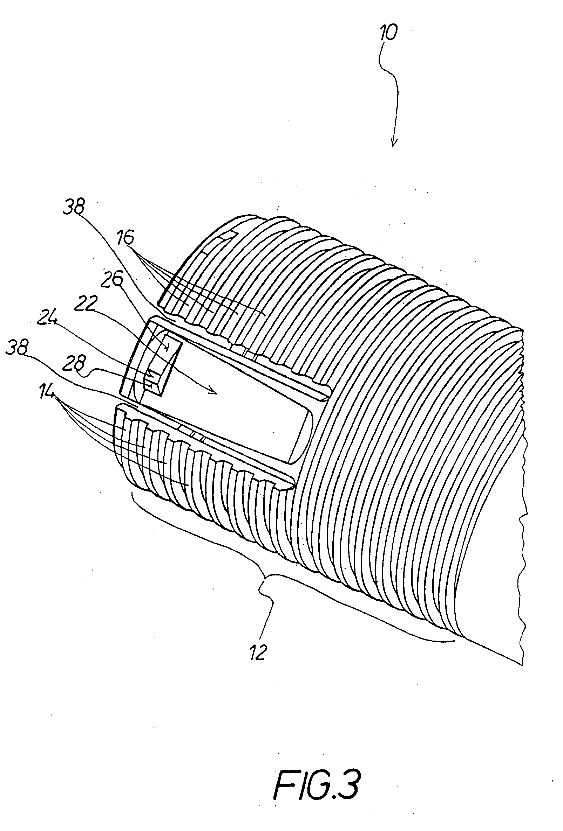

Figur 3 noch eine andere perspektivische Teilansicht des Spulendorns gemäß den Figuren 1 und 2,

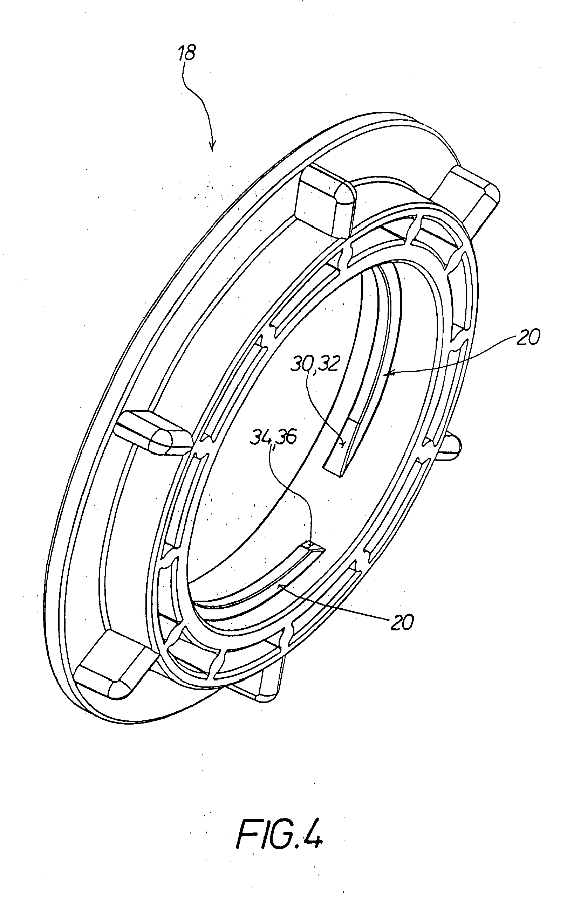

Figur 4 eine perspektivische Ansicht einer Ausführungsform des ringförmigen Mutterelementes für den Spulendorn gemäß den Figuren 1 bis 3 in einem anderen, d.h. größeren Maßstab,

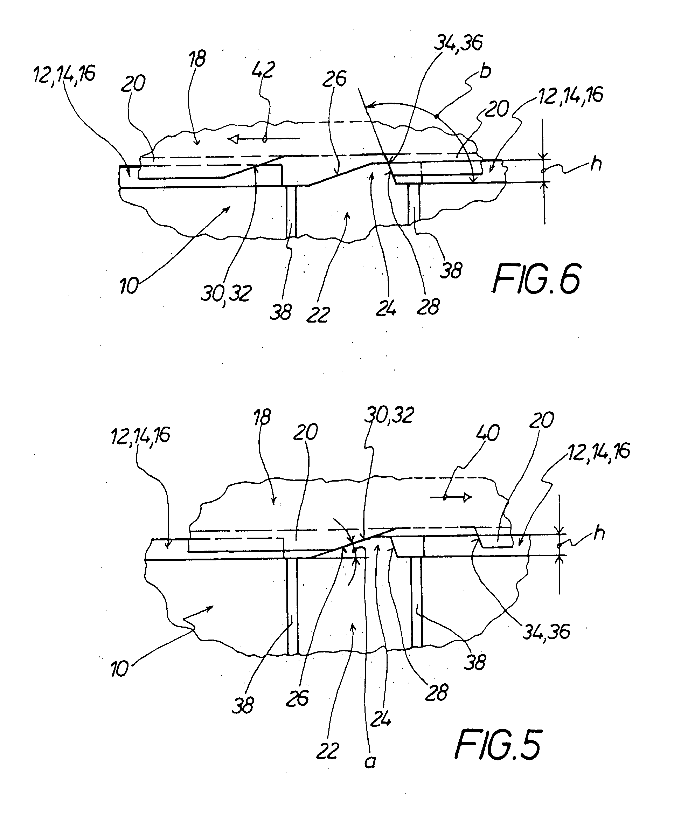

Figur 5 schematisch abschnittweise den Spulendorn und das Mutterelement in einer Abwicklung zur Verdeutlichung der relativ Kraft sparenden Aufschraubbewegung des Mutterelementes auf den Spulendorn, und
Figur 6 schematisch abschnittweise den Sputendorn und das Mutterelement in einer Abwicklung zur Verdeutlichung der eine relativ große Kraft benötigenden Abschraubbewegung des Mutterelementes von dem Spulendorn.

Die Figuren 1 bis 3 verdeutlichen eine Ausführungsform des Spulendorns 10 einer ( nicht gezeichneten ) Spule für Draht, insbesondere für Schweißdraht. Der Spulendorn 10 weist einen Außengewindeabschnitt 12 mit Gewinderippen 14 und mit diesen abwechselnden Gewinderillen 16 auf. Die Gewinderippen 14 und die Gewinderillen 16 definieren sogenannte Außengewindegänge.

Figur 4 zeigt eine Ausführungsform des ringförmigen Mutterelementes 18 für den Spulendorn 10 gemäß den Figuren 1 bis 3. Das Mutterelement 18 ist mit einer Innengewinderippe 20 ausgebildet, die mindestens einen Innengewindegang bildet. In Figur 4 ist eine Ausbildung gezeichnet, in der die Innengewinderippe 20 keinen vollständig umlaufenden Innengewindegang bildet.

Der Spulendorn 10 ( siehe die Figuren 1 bis 3 ) weist einen sich axial erstreckenden, radial federnden Bereich 22 auf. Die Gewinderippen 14 des Außengewindeabschnittes 12 des Spulendorns 10 sind entlang des federnden Bereiches 22 unterbrochen. D.h. der federnde Bereich 22 weist keine Gewinderippen 14 auf.

Der federnde Bereich 22 ist materialeinstückig mit einem Rampenelement 24 ausgebildet, das vom federnden Bereich 22 radial nach außen wegsteht und das in Umfangsrichtung des Spulendorns 10, d.h. in Richtung der Schraubenlinie der Außengewindegänge der Gewinderippen 14 und Gewinderillen 16 orientiert ist.

Bei dem in den Figuren 1 bis 3 dargestellten Ausführungsbeispiel des Spulendorns 10 ist das Rampenelement 24 einer Gewinderille 16 zugeordnet.

Das Rampenelement 24 weist eine flach geneigte Aufschraub-Rampenfläche 26 und eine steil geneigte Abschraub-Rampenfläche 28 auf. Dem entsprechend weist die Innengewinderippe 20 des Mutterelementes 18 eine in Aufschraubrichtung vorgesehene erste Endfläche 30, die als flach geneigte Aufschraub-Gegenrampenfläche 32 ausgebildet ist, und eine von der ersten Endfläche 30 entfernte zweite Endfläche 34 auf, die als steil geneigte Abschraub-Gegenrampenfläche 36 ausgebildet ist.

Die Funktions- d.h. Wirkungsweise der flach geneigte Aufschraub-Rampenflächen 26 und der flach geneigten Aufschraub-Gegenrampenfläche 32 sowie der steil geneigten Abschraub-Rampenfläche 28 und der steil geneigten Abschraub-Gegenrampenfläche 36 wird weiter unten in Verbindung mit den Figuren 5 und 6 beschrieben.

Wie aus den Figuren 1 bis 3 ersichtlich ist, ist der Spulendorn 10 mit einem Paar Schlitze 38 ausgebildet, die in Umfangsrichtung voneinander beabstandet sind, und die sich in axialer Richtung des Spulendorns 10 erstrecken. Durch die beiden Schlitze 38 ist der radial federnde Bereich 22 des Spulendorns 10 seitlich begrenzt. Die Gewinderippen 14 des Außengewindeabschnitts 12 des Spulendorns 10 erstrecken sich bis zu den beiden Schlitzen 38 und enden hier.

Das Rampenelement 24 des Spulendorns 10 besitzt eine radiale Höhenabmessung "h" (siehe die Figuren 5 und 6), die an die Höhenabmessung der Gewinderippen 14 des Spulendorns 10 angepaßt ist.

Die flach geneigte Aufschraub-Rampenfläche 26 des Rampenelementes 24 des Spulendorns 10 und die flach geneigte Aufschraub-Gegenrampenfläche 32 der Innengewinderippe 20 des Mutterelementes 18 weisen aneinander angepässte kleine spitze Winkel "a" auf. Die steil geneigte Abschraub-Rampenfläche 28 des Rampenelementes 24 des Spulendorns 10 und die steil geneigte Abschraub-Gegenrampenfläche 36 des ringförmigen Mutterelementes 18 weisen aneinander angepasste kleine stumpfe Winkel "b" auf (siehe die Figuren 5 und 6). In den Figuren 5 und 6 ist der federnde Bereich 22 mit dem Rampenelement 24 abschnittweise und das ringförmige Mutterelement 18 mit der Innengewinderippe 20 abschnittweise, schematisch gezeichnet.

Durch die flache Neigung der Aufschraub-Rampenfläche 26 und der Aufschraub-Gegenrampenfläche 32 ist eine kraftsparende Aufschraubung des ringförmigen Mutterelementes 18 auf den Spulendorn 10 möglich. Die Aufschraubrichtung ist in Figur 5 durch den Pfeil 40 verdeutlicht. Demgegenüber verdeutlicht die Figur 6 die Abschraubung des Mutterelementes von dem Spulendorn 10 durch den Pfeil 42. Durch die steil geneigte Abschraub-Rampenfläche 28 und die daran angepasste steil geneigte Abschraub-Gegenrampenfläche 36 ist zur Abschraubung ein großer Kraftaufwand erforderlich, bzw. es wird ein ungewolltes Abschrauben des Mutterelementes 18 von dem Spulendorn 10 verhindert. Die Abschraub-Rampenfläche 28 und die Abschraub-Gegenrampenfläche 36 bilden gleichsam einen Anschlag für das ringförmige Mutterelement 18 auf dem Spulendorn 10, der nur mit einem definierten erheblichen Kraftaufwand überwunden werden kann, um das ringförmige Mutterelement 18 im Bedarfsfall von dem Spulendorn 10 abzuschrauben und zu entfernen.

### Bezugsziffernliste:

- 10: Spulendorn
- 12: Außengewindeabschnitt (von 10)
- 14: Gewinderippen (von 12)
- 16: Gewinderillen (von 12)
- 18: ringförmiges Mutterelement (für 10)
- 20: Innengewinderippe (von 18)
- 22: federnder Bereich (von 10)
- 24: Rampenelement (an 22)
- 26: flach geneigte Aufschraub-Rampenfläche (von 24)
- 28: steil geneigte Abschraub-Rampenfläche (von 24)
- 30: erste Endfläche (von 20)
- 32: flach geneigte Aufschraub-Gegenrampenfläche (von 20 an 30)
- 34: zweite Endfläche (von 20)
- 36: steil geneigte Abschraub-Gegenrampenfläche (von 20 an 34)
- 38: Schlitze (in 10 für 22)
- 40: Pfeil/ Aufschraubrichtung (von 18)
- 42: Pfeil/ Abschraubrichtung (von 18)

## Patentansprüche

1. Spulendorn (10) mit einem ringförmigen Mutterelement (18) einer Korbspule für Draht, insbesondere für Schweißdraht, wobei der Spulendorn (10) einen Außengewindeabschnitt (12) mit Außengewindegänge definierenden Gewinderippen (14) und damit abwechselnden Gewinderillen (16) besitzt, und das Mutterelement (18) mit einer mindestens einen Innengewindegang bildenden Innengewinderippe (20) ausgebildet ist,
**dadurch gekennzeichnet,**
**dass** der Spulendorn (10) einen sich axial erstreckenden, radial federnden Bereich (22) aufweist, dass die Gewinderippen (14) des Außengewindeabschnittes (12) sich nur bis zu dem federnden Bereich (22) erstrecken, dass der federnde Bereich (22) mit einem Rampenelement (24) ausgebildet ist, das in Umfangsrichtung des Spulendorns (10) orientiert mindestens einer Gewinderille (16) des Spulendorns (10) zugeordnet ist, dass das Rampenelement (24) eine flach geneigte Aufschraub-Rampenfläche (26) und eine steil geneigte Abschraub-Rampenfläche (28) aufweist, und dass die Innengewinderippe (20) des Mutterelements (18) in Umfangsrichtung zwei voneinander entfernte Endflächen (30, 34) aufweist, von welchen die in Aufschraubrichtung des Mutterelementes (18) vorgesehene erste Endfläche (30) eine flach geneigte Aufschraub-Gegenrampenfläche (32) und von welchen die in Abschraubrichtung des Mutterelementes (18) vorgesehene zweite Endfläche (34) eine steil geneigte Abschraub-Gegenrampenfläche (36) aufweist.

2. Spulendorn (10) nach Anspruch 1,
**dadurch gekennzeichnet,**
**dass** der Spulendorn (10) mit einem Paar in Umfangsrichtung voneinander beabstandeten, sich axial erstreckenden Schlitzen (38) ausgebildet ist, durch welche der federnde Bereich (22) seitlich begrenzt ist, wobei die Gewinderippen (14) des Spulendorns (10) sich bis zu den beiden Schlitzen (38) erstrecken.

3. Spulendorn (10) nach Anspruch 1,
**dadurch gekennzeichnet,**
**dass** das Rampenelement (24) eine radiale Höhenabmessung (h) besitzt, die an die Höhenabmessung der Gewinderippen (14) des Spulendorns (10) angepaßt ist.

4. Spulendorn (10) mit einem ringförmigen Mutterelement (18) nach Anspruch 1,
**dadurch gekennzeichnet,**
**dass** die flach geneigte Aufschraub-Rampenfläche (26) des Rampenelementes (24) des Spulendorns (10) und die flach geneigte Aufschraub-Gegenrampenfläche (32) der Innengewinderippe (20) des ringförmigen Mutterelementes (18) aneinander angepasste kleine spitze Winkel (a) aufweisen.

5. Spulendorn (10) mit einem ringförmigen Mutterelement (18) nach Anspruch 1,
**dadurch gekennzeichnet,**
**dass** die steil geneigte Abschraub-Rämpenfläche (28) des Rampenelementes (24) des Spulendorns (10) und die steil geneigte Abschraub-Gegenrampenfläche (36) der Innengewinderippe (20) des ringförmigen Mutterelementes (18) aneinander angepasste kleine stumpfe Winkel (b) aufweisen.
